# EUROPEAN PATENT APPLICATION

(11) **EP 1 376 722 A2**
(43) Date of publication of application: **02.01.2004**
(21) Application number: 03011671.9
(22) Date of filing: 23.05.2003
(51) Int. Cl.: H01M 4/24, H01M 6/40

(54) **Zinc polymer thick film composition**

(30) Priority: 19.06.2002 US 389767 P
(71) Applicant: E.I. DUPONT DE NEMOURS AND COMPANY, Wilmington, Delaware 19898 (US)
(72) Inventor: Dorfman, Jay Robert, Durham, North Carolina 27713 (US)
(74) Representative: Towler, Philip Dean

(57) **Abstract**

The invention is directed to a zinc composition (102) comprising finely divided zinc particles dispersed in organic medium wherein the organic medium comprises a solvent and a polymer selected from polyhydroxy ether, polyurethane, co-polymer of acryionitrile/vinylidene chloride and mixtures thereof. The invention is further directed to the use of the composition as an electrode such as the anode in a printed battery.

## Description

### FIELD OF THE INVENTION

The invention is directed to a zinc polymer thick film composition for use as an electrode in a battery cell.

### BACKGROUND OF THE INVENTION

Since electrical devices have become miniaturized, the need for miniaturized power sources has grown. Many of the new power sources are ultra thin battery cells. Such a battery is discussed in WO 01/49365 to Birchpoint Medical. The discussion includes a known amount of molten zinc can be deposited over a wire substrate to produce an oxidizable species content. Further it is disclosed that an electrode is formed by screen printing of thin coatings, having known amounts of electroactive materials, over a conductive trace on a flexible substrate and, also that a galvanic source has electrodes by screen printing.

The use of a screen-printable zinc PTF (polymer thick film) composition of the present invention as a component of an anode or the negative terminal in such a battery is not known. The advantage of screen-printed components in a battery is much reduced cost and weight compared with the conventional cylindrical batteries.

### SUMMARY OF THE INVENTION

The invention is directed to a zinc composition comprising finely divided zinc particles dispersed in organic medium wherein the organic medium comprises a solvent and a polymer selected from polyhydroxy ether, polyurethane, co-polymer of acrylonltrile/vinylidene chloride and mixtures thereof. The invention is further directed to the use of the composition as an anode in a printed battery.

### BRIEF DESCRIPTION OF THE DRAWING

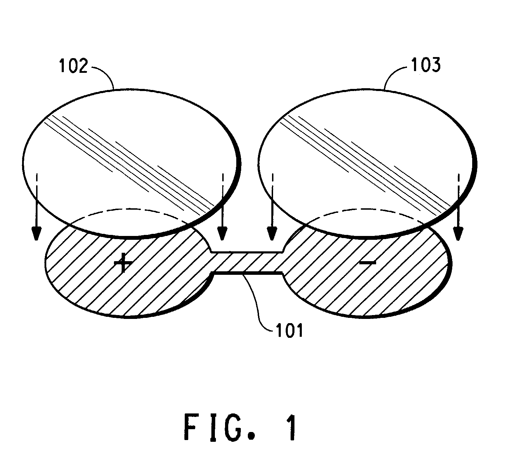

Figure 1 is an illustration of a printed battery.

### DETAILED DESCRIPTION OF THE INVENTION

The invention is directed to a zinc PTF composition and its use as an anode in a battery cell. The zinc PTF composition comprises finely divided particles of (a) zinc dispersed in (b) organic medium. As used herein, the term "finely divided" is intended to mean that the particles are sufficiently fine to pass through a 400-mesh screen (US standard sieve scale). For example, in one embodiment, at least 50% of the particles are in the size range of about 0.01 to about 20 µm. In another embodiment at least 90% of the particles are in the size range of about 0.01 to about 20 µm. In yet another embodiment, substantially all of the particles are in the size range of about 0.01 to about 20 µm. In one embodiment, the largest dimension of substantially all particles is no more than about 10 µm. In yet another embodiment, the largest dimension of substantially all particles are no more than about 5 µm.

Zinc particles generally comprise substantially all of the solid phase material used to prepare the compositions of the invention. Zinc is present in amounts of from about 30 to about 99.4%, preferably from about 50 to about 98%, more preferably from about 60 to about 90%, and most preferably from about 65 to about 75%, by weight of the total solids present in the composition. Organic medium is present in amounts of from about 0.6 to about 70%, preferably from about 2 to about 30%, by weight of the total solids present in the medium. Solvent is present in amounts of about 0.1 to about 30%, preferably from about 2 to about 20%, more preferably from about 4 to about 16%, and most preferably from about 6 to about 12%, by weight of the total solids present in the composition.

The electrochemically active zinc particles can be in any form suitable for the production of the compositions of the present invention. For example, zinc particles may be in the form of either metal powders or metal flakes or blends thereof. In one embodiment of the invention, the zinc particles are a blend of powder and flake. The particle size of the metal powder or flake is not by itself narrowly critical in terms of technical effectiveness. The zinc particles should, however, be of a size that is appropriate to the method of application thereof, which is usually screen-printing. Therefore, the metal particles should therefore generally be no larger than about 20 µm in size and preferably less than about 10 µm. The minimum particle size is normally about 0.1 µm.

The zinc particles may be mixed with conductive carbon such as carbon black and/or graphite. Carbon blacks that are preferred are those like Cabot Monarch 120. Other types of carbon blacks are furnace and acetylene blacks but the less conductive thermal and channel process blacks may be used.

The particles described above are dispersed in organic medium. The organic medium composes the organic phase and solvent phase of the composition. The organic medium is preferably formulated to give (1) appropriate wettability to the particles and the substrate; (2) a good drying rate; (3) a dried film strength sufficient to withstand rough handling, (4) a satisfactory appearance to the dried composition, (5) necessary adhesion to the desired substrate, (6) resistance to environment changes and (7) flexibility

Thermoplastic polymers are the polymeric binders used in the organic medium of the composition. Unlike PTF compositions with crosslinked binders, which require long curing times at high temperatures, thermoplastic based PTF compositions can be used in a quick printing-drying process suitable for reel-to-reel sensor fabrication. Suitable thermoplastic polymers provide a matrix that holds the electrochemically active particles together and forms a coating with good scratch resistance and good adhesion to plastic film substrates. Thermoplastic polymers and mixtures thereof with a glass transition temperature, T_{g} > about 50 °C are suitable. Thermoplastic polymers for use in the invention include polyhydroxy ether, polyurethane, co-polymer of acrylonitrile/vinylidene chloride and mixtures thereof. The polymeric binders can be dissolved in solvents, or solvent blends to provide a vehicle for making metal or metal-graphite compositions suitable for screen-printing.

In the dry electrode coating, an amount of polymer in the range of about 5 to about 20% by weight based on solids is preferable. A lower polymer level results in a porous coating, which has low adhesion and poor printability. A higher polymer level leads to low electrochemical activity.

Solvents suitable must dissolve the polymer. Some examples of solvents are listed: propylene glycol monomethyl ether acetate, methyl propanol acetate, 1-methoxy-2 propanol acetate, methyl cellosolve acetate, butyl propionate, primary amyl acetate, hexyl acetate, cellosolve acetate, pentyl propionate, diethylene oxalate, dimethyl succinate, dimethyl glutarate, dimethyl adipate, methyl isoamyl ketone, methyl n-amyl ketone, cyclohexanone, diacetone alcohol, diisobutyl ketone, n-methyl pyrolidone, butyrolactone, isophorone, methyl n-isopropyl ketone. Various combinations of these and other solvents are formulated to obtain the desired viscosity and volatility requirements for the process that the polymer thick film composition is to be employed. Additives as known to those skilled in the art may be employed in the organic medium to fine-tune the viscosity for printing.

After applying a zinc polymer thick film composition on a base material, the composition is typically dried which cause the volatile solvents to be driven off. In a conventional process, after drying, depending on the application, the composition will undergo a curing process wherein the polymer will bind the powder to form a pattern or other desired result. In order to obtain the desired end properties, one skilled in the art knows it is important that the thick film composition contains an optimized amount of each of the desired ingredients to meet the end result. An optimized amount of each ingredient is important to achieve the desired thick film conductor properties. The properties needed may include coverage, density, uniform thickness and circuit pattern dimensions and electrical properties.

Typically, in formulating a zinc thick film composition the solids are mixed with an organic medium by mechanical mixing using a planetary mixer, then dispersed on a three-roll mill to form a composition having suitable consistency and rheology for screen printing. The latter is printed as a "thick film" on a substrate in the conventional manner. Dispersion methods other than three-roll milling are also possible, including but not limited to power mixing. These dispersion methods are well known in the industry.

The ratio of medium to solids in the dispersions can vary considerably and depends upon the manner in which the dispersion is to be applied and the kind of medium used. Good coverage can be obtained with dispersions that contain complementarily about 50 to about 91% solids and about 50 to about 9% medium, as described above. The compositions of the present invention can, of course, be modified by the addition of other materials, which do not affect its beneficial characteristics. Such formulations are well within the state of the art.

The compositions can be conveniently prepared on a three-roll mill or power-mixer. The viscosity of the compositions can be within the following ranges when measured on a viscometer at low, moderate, and high shear rates:

| Shear Rate (sec⁻¹) | Viscosity (Pa·s) |
|---|---|
| 0.2 | 100-5000 |
| | 300-2000 |
| | 600-1500 |
| 4 | 40-400 |
| | 100-250 |
| | 120-200 |
| 40 | 10-150 |
| | 25-120 |
| | 50-100 |

### Application

The zinc composition of the present invention is used in a printed battery cell. Figure 1 depicts a simple printed battery cell design. A PTF Ag conductor composition is screen-printed in the dumbbell-shaped pattern (101) on a substrate shown in Figure 1 and cured at about 130°C for 5 minutes. Suitable substrates are, for example, polyester or polycarbonate where typical thicknesses are about 4 to about 7 mils. A PTF zinc composition (102), as described above, overprints the Ag composition on one side of the dumbbell as indicated and cured as above. The zinc composition is typically applied by screen-printing. A PTF Ag/AgCl (103) composition overprints the other side of the dumbbell. A particular application where this type of battery would be advantageous is in iontophoretic drug delivery. Here, the drug is delivered through the skin over a designated time period (typically about 12 to about 24 hours). The battery as described above may be made to function for about 12 to about 24 hours.

### EXAMPLES

The components of Medium A and Medium B are used in the following Examples:

| Medium A | |
|---|---|
| 25.00% | Polyhydroxyether Polymer |
| 15.00 | Carbitol® Acetate Solvent |
| 60.00 | Dowanol® DPM Solvent |

| Medium B | |
|---|---|
| 20.40% | Vinylidene Chloride/Acrylonitrile Polymer |
| 79.60 | DiBasic Esters Solvent |

### Example 1

The PTF composition of Example 1 had the following composition, where the percentages are by weight based upon the weight of the PTF composition:

| | |
|---|---|
| 75.00% | Zinc Powder #1239 (average particle size 25 microns) |
| 24.50 | Medium A |
| .50 | Flow Additive (silicon containing compound [antifoam compound SWS 203 from Wacker Silicones Corp.]) |

The composition was prepared in a power-mixer.

### Example 2

The PTF composition of Example 2 had the following composition, where the percentages are by weight, based upon the weight of the PTF composition:

| | |
|---|---|
| 75.00% | Zn Powder #1239 |
| 24.50 | Medium B |
| .50 | Flow Additive (same as Ex 1) |

The composition was prepared in a power-mixer.

### Example 3

The PTF composition of Example 3 had the following composition, where the percentages are by weight, based upon the weight of the PTF composition:

| | |
|---|---|
| 75.00% | Zn Powder #44 (average particle size 5 microns) |
| 24.50 | Medium B |
| .50 | Flow Additive (same as Ex 1) |

The composition was prepared in a power-mixer.

### Example 4

The PTF composition of Example 4 had the following composition, where the percentages are by weight, based upon the weight of the PTF composition:

| | |
|---|---|
| 50.00% | Zn Powder #1239 |
| 5.00 | Carbon Powder Monarch 700 |
| 44.50 | Medium B |
| .50 | Flow Additive (same as Ex 1) |

The composition was prepared in a power-mixer.

### Example 5

A test battery was constructed as follows:

A "dumbbell-shaped" pattern of PTF Ag such as DuPont® 5028 (available from The DuPont Company, Wilmington, DE) was printed using a 280 stainless steel screen and the composition was cured at 130°C for 5 min in a box oven. One of the "dumbbells" was over-printed with the Zn-containing composition as given in Example 1 and cured as above. The other dumbbell was over-printed with a Ag/AgCl containing paste such as DuPont® 5870 and cured as above. The entire circuit was cut in half so as to isolate the anode (Zn) and cathode (Ag/AgCl). The circuit was partially immersed in an electrolyte solution. An ampmeter with leads was attached to each half of the circuit and a current (milliamps) was detected. As is typical for this type of electrochemical cell, the Zinc metal was oxidized to zinc ions at the anode, while silver ions (Ag⁺) (from the AgCI) was reduced to silver metal at the cathode.

### Example 6

Two compositions (Composition A and B) were made as detailed below. Composition A represents the present invention, while Composition B represents the comparative example.

The polymer of Composition A was supplied in a pellet form and was dissolved in a common organic solvent, dipropylene glycol monomethyl ether. The polymer fully dissolved in approximately 1 hour. The zinc, dissolved polymer, and printing/flow additive were combined and mixed for 30-60 minutes to wet out the particulate. The glass transition temperature, T_{g}, of the polymer was approximately 90°C and therefore, produced a superior quality screen-printable ink (as opposed to Composition B) with typical rheology characteristics conducive to screen-printing.

The polymer of Composition B was supplied as a solid block at room temperature. Dipropylene glycol monomethyl ether could not be used to dissolve the polymer of Composition B, therefore Carbitol Acetate was used. The polymer of Composition B had a T_{g} of approximately 0°C, a lower molecular weight and a lower viscosity as compared to Composition A.

Each of the Compositions were formed onto a test pattern using the methodology as described above in Example 5. These Zinc-containing compositions were used as the anode material, and product 5876 (Ag/AgCl) was used as the cathode material as described above in Example 5. A 230 mesh polyester screen was used for screen-printing the inks, and they were dried at 130°C for 10 minutes in a box oven. The resultant currents (milliamps) measured for the patterns utilizing Composition A and B were obtained exactly as per the procedure given above in Example 5.

| Composition A | |
|---|---|
| 70.0% | Zinc Powder #44 |
| 29.5 | Medium Containing 25.0% Polyhydroxyether Polymer |
| 0.5 | Flow Additive (same as Ex 1) |

| Composition B (Comparative) | |
|---|---|
| 70.0% | Zinc Powder #44 |
| 29.5 | Medium Containing 25.0% copolymer of vinyl acetate and vinyl laurate(Vinnapas B500 from Wacker) |
| 0.5 | Flow Additive (same as Ex 1) |

### Battery Measurements:

A useful comparison for the above two compositions, as they function as an anode, is the measurement of capacity. Capacity is defined as the time duration that an electrode can deliver a constant current flux for transporting drugs through the skin. The higher the capacity, the longer the device can deliver the drug. A comparison between two compositions is valid if the area encompassed in the patterns being compared is the same.

| | |
|---|---|
| Capacity Using Composition A as anode | 51.47 |
| Capacity Using Composition B as anode | 43.33 |

A statistical analysis using a two-sample T-test shows the two populations are clearly different (p=0.0).

This 20% improvement in capacity is significant and unexpected. Additionally, this 20% improvement in capacity theoretically results in a longer battery life (by roughly 20%) as opposed to the presently available compositions.

## Claims

1. A zinc composition utilized in the formation of an electrode comprising
(a) finely divided zinc particles dispersed in
(b) organic medium, wherein the organic medium comprises a solvent and a polymer selected from polyhydroxy ether, polyurethane, copolymer of acrylonitrile/vinylidene chloride or mixtures thereof.

2. The composition of Claim 1 wherein said composition further comprises an electrically conductive carbon component selected from carbon black, graphite, or mixtures thereof.

3. The composition of Claim 1 wherein said polymer has a glass transition temperature of greater than about 50 °C.

4. A method of increasing the capacity of an electrode which comprises utilizing in the manufacture of said electrode a composition comprising (a) finely divided zinc particles dispersed in (b) an organic medium wherein the organic medium comprises a solvent and a polymer selected from polyhydroxy ether, polyurethane, co-polymer of acrylonitrile/vinylidene chloride or mixtures thereof.

5. The method of Claim 4 wherein said polymer has a glass transition temperature of greater than about 50 °C.

6. The use of a composition comprising (a) finely divided zinc particles dispersed in (b) an organic medium wherein the organic medium comprises a solvent and a polymer selected from polyhydroxy ether, polyurethane, co-polymer of acrylonitrlle/vinylidene chloride or mixtures thereof for the purpose of increasing the capacity of an electrode.

7. The method of Claim 4 wherein said composition further comprises an electrically conductive carbon component selected from carbon black, graphite, or mixtures thereof.

8. A use according to Claim 6 further comprising the purpose of forming an anode in a battery.

9. A method according to Claim 4 further comprising the purpose of forming an anode in a battery.

10. A method according to Claim 4 wherein said manufacture comprises a screen-printing process.

11. A battery made in accordance to the method of Claim 9.
